# EUROPEAN PATENT APPLICATION

(11) **EP 1 197 893 A2**
(43) Date of publication of application: **17.04.2002**
(21) Application number: 01119818.1
(22) Date of filing: 16.08.2001
(51) Int. Cl.: G06F 17/60

(54) **User guide system for amusement park facilities and method of the same**

(30) Priority: 29.08.2000 KR 2000050448
(71) Applicant: Koh, Soon Jong, Sungnam, Kyunggi-do (KR)
(72) Inventor: Koh, Soon Jong, Sungnam, Kyunggi-do (KR)
(74) Representative: Dr. Weitzel & Partner

(57) **Abstract**

The present invention relates to a use guide system for amusement park facilities. The system according to the present invention includes a plurality of user terminals each having a communication unit for receiving and displaying a playing facility ticketing schedule information and a playing facility use state information, transmitting a wireless reservation information with respect to the playing facility using the received playing facility state information and receiving a playing facility riding state signal, a plurality of playing facility terminals installed in each playing facility for gathering an information with respect to the use state of each playing facility in real time, receiving a reservation information trough the user terminals, performing a ticketing management and transmitting the playing facility use state data through a communication network at a certain time, and a central management server for receiving the playing facility use state information from the playing facility terminal, classifying and storing the playing facility information based on a certain reference, performing a ticketing schedule, transmitting one among the playing facility riding state signal, the ticketing schedule information and the playing facility riding state signal to the user terminals, receiving a reservation information from the user terminal, performing the ticketing schedule and transmitting the ticketing schedule information to the playing facility terminals.

## Description

### BACKGROUND OF THE INVENTION

### 1. Field of the Invention

The present invention relates to a use guide system for amusement park facilities and a method of the same, and in particular to a use guide system for amusement park facilities and a method of the same which are capable of providing an amusement park use guide service using a wireless communication and a wired communication, a remote reservation service for an amusement park playing facility and a remote reservation service for an exhibition facility in real time for effectively using various park facilities such as a playing facility, an exhibition, etc. in an amusement park having various facilities.

### 2. Description of the Background Art

A large size amusement park or a certain resort has various amusement facilities. In addition, various exhibition facilities are installed for events in the park. When a certain user wants to go to an amusement park having various amusing facilities, the user must wait for a long time to buy a ticket. In addition, the user having a ticket must wait long time in front of a corresponding facility. When the user has his turn, the user uses the facility. The above-described problem also occurs for using the exhibition facilities. The above-described problems occur because the user can not receive any information from a remotely located amusement park. Namely, there is not a remote reservation system for the amusement park facilities. It is impossible to receive an information like a playing facility use state information with respect to a playing facility in a region where is located remotely from the playing facility.
In addition, if many peoples use an amusement park at one time, the users must wait for a long time to use a corresponding playing facility. Furthermore, in this case, since many peoples are concentrated at one facility, the amusement park may become complex.

### SUMMARY OF THE INVENTION

Accordingly, it is an object of the present invention to provide a use guide system for amusement park facilities and a method of the same which are capable of gathering various information of a facility use state information and a facility information, transmitting the gathered information to a user terminal and remotely performing a facility reservation function, so that a user can easily receive a playing facility use state signal and a facility entrance state signal with respect to a corresponding facility for thereby decreasing the time required for using facilities and preventing a complex park and it is possible to provide various useful information to the users.

To achieve the above object, there is provided a use guide system for amusement park facilities which includes a plurality of user terminals each having a communication unit for receiving and displaying a playing facility ticketing schedule information and a playing facility use state information, transmitting a wireless reservation information with respect to the playing facility using the received playing facility state information and receiving a playing facility riding state signal, a plurality of playing facility terminals installed in each playing facility for gathering an information with respect to the use state of each playing facility in real time, receiving a reservation information trough the user terminals, performing a ticketing management and transmitting the playing facility use state data through a communication network at a certain time, and a central management server for receiving the playing facility use state information from the playing facility terminal, classifying and storing the playing facility information based on a certain reference, performing a ticketing schedule, transmitting one among the playing facility riding state signal, the ticketing schedule information and the playing facility riding state signal to the user terminals, receiving a reservation information from the user terminal, performing the ticketing schedule and transmitting the ticketing schedule information to the playing facility terminals.

### BRIEF DESCRIPTION OF THE DRAWINGS

The present invention will become better understood with reference to the accompanying drawings which are given only by way of illustration and thus are not limitative of the present invention, wherein;
Figure 1 is a view illustrating the entire construction of a use guide system for amusement park facilities according to the present invention;
Figure 2 is a block diagram illustrating an inner construction of a central management server of Figure 1;
Figure 3 is a block diagram illustrating an inner construction of a playing facility terminal of Figure 1;
Figure 4 is a block diagram illustrating an inner construction of a user terminal of Figure 1;
Figure 5 is a flow chart of a playing facility use guide method of an amusement park according to the present invention;
Figure 6 is a flow chart of a processing sequence of a central management server according to the present invention;
Figure 7 is a flow chart of a processing sequence of a playing facility terminal according to the present invention; and
Figure 8 is a flow chart of a processing sequence of a user terminal according to the present invention.

### DETAILED DESCRIPTION OF THE PREFERRED EMBODIMENTS

The embodiments of the present invention will be explained with reference to the accompanying drawings.
An information concerning a playing facility inputted by a playing facility manager through a playing facility terminal 2 installed in each playing facility is transmitted to a central management server 1 of a central management system. The central management server 1 analyses the use states of each playing facility using the received playing facility information and performs a ticketing schedule by a scheduler 24. When users enter the park, a park manager gives each viewer a user terminal 3 capable of performing a bi-directional wireless communication with the central management server 1. Whenever a request signal is received from a user terminal for a certain time, the central management server 1 transmits a playing facility information to the userterminal 3. The user terminal 3 which received the information from the central management server 1 performs a playing facility reservation based on the received information. In addition, when a playing facility use state signal is received from the central management server, the user moves to a certain place for the user of a playing facility before the start time of the playing facility. Therefore, the user is capable of directly checking various guide information of the park using the user terminal. In addition, the playing facility reservation information received by the central management server 1 is transmitted to the playing facility terminal 2 from the central management server 1 for thereby preventing any interference for a ticketing service of the playing facility manager. Here, the central management server 1 and the playing facility terminal 2 cooperate each other for thereby transmitting and receiving data in real time when a certain playing facility information is changed. In addition, the central management server 1 forms a communication channel when a request information is received from the user terminal 3 for thereby performing a bi-directional wireless communication with the user terminal 3 in real time.
When a user made a reservation, the central management server 1 transmits a reservation information to the playing facility terminal 2. In addition, the central management server 1 transmits a riding state signal to the user terminal 3 before the user uses the playing facility. The user terminal 3 which received the riding state signal is displayed on a display unit like a video output unit 43 of the user terminal 3 and is outputted through an audio output unit for thereby informing the user of an a received state of the signal, so that the user can use a corresponding facility based on the entrance time. In this process, the user terminal 3 may include a use state signal generator 48 capable of informing a data transmission from the central management server 1 like a vibration in addition to the audio signal.
Therefore, in the present invention, it is possible to prevent the user from waiting for a long time to use a certain playing facility or an exhibition in an amusement park and a complex state in the park. In addition, the user receives various guide information in real time, so that the user can effectively use the facilities.
The embodiments of the present invention will be explained in more detail with reference to the accompanying drawings.

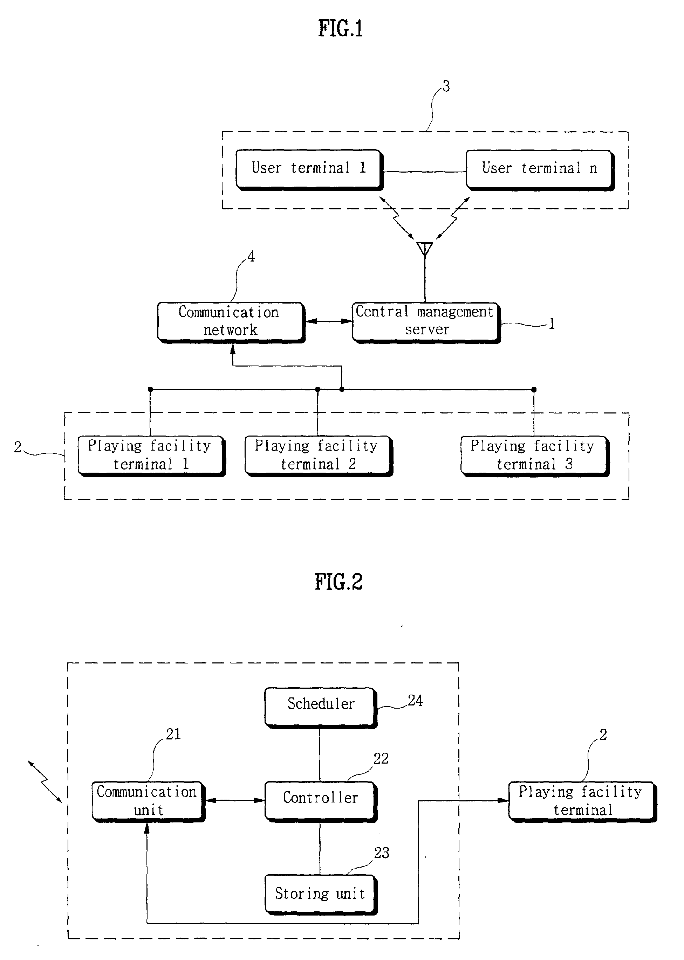

Figure 1 is a view illustrating the entire construction of a use guide system for amusement park facilities according to the present invention.
There are provided a plurality of playing facility terminals 2 capable of gathering, transmitting and receiving various playing facility information. In addition, a central management server 1 receives a playing facility information from the playing facility terminal, performs a ticketing and scheduling operation with respect to each playing facility using the received playing facility information and transmits a ticketing schedule information and playing facility riding state signal. A plurality of user terminals 3 receive various signals from the central management server 1 and transmit the reservation information and identification codes to the central management server.
In more detail, the playing facility terminal 2 is installed in each playing facility for thereby gathering a playing facility use information such as a playing facility ticketing information, a reservation information, a playing facility scheduling information, etc. and transferring to the central management server 1 and receiving a ticket scheduling information and a user reservation information from the central management server 1. The central management server performs a ticketing schedule with respect to the playing facility ticketing of each playing facility using various playing facility use information transmitted from the playing facility terminal 2 which performs a ticketing service of the playing facility and a use state of the reserved user, computes the remaining seats of the playing facility and an available time of each playing facility, updates the ticketing schedule information such as a remaining seats and playing facility use time information which are the ticketing materials with respect to the playing facilities with reference to the reservation information of the user terminals 3 when the reservation information is received from the user terminal 3, and transmits to the playing facility terminal 2 for thereby preventing any problem for the ticketing work of the playing facility manager. In addition, a facility use state signal is transmitted to the users who bought the tickets or the users who bought the tickets based on the reservation before they use the facilities using the user terminals 3.

When the users enter the amusement park, the user terminals 3 are given to each user. The user terminals 3 receive an amusement park guide information and a ticketing schedule information with respect to a playing facility ticketing which are gathered from the central management server 1 and perform a reservation with respect to the playing facilities for the users who want to reserve using a bi-directional wireless data communication function in a remote region.
Therefore, a communication network 4 is provided between the central management server 1 and the playing facility terminal 2 and the central management server 1 and the user terminals 3 for implementing a data communication there between.
Figure 2 is a block diagram illustrating an inner construction of the central management server 1 in an amusement park playing facility use guide system.

The central management server 1 according to the present invention includes a communication unit 21 for performing a data communication with the playing facility terminal 2 and the user terminals 3, a storing unit 23 for storing an externally received data and a certain management program, a scheduler 24 for performing a ticketing schedule of the playing facilities using the data stored in the storing unit 23, and a controller 2 for controlling each element of the central management server 1.

The central management server 1 and the playing facility terminal 2 are connected based on a LAN(Local Area Network) and are implemented based on a wired communication network or a wireless communication network.
The management program stored in the storing unit includes an operation system for the central management server 1, a database, a database engine for controlling the database, and a communication drive for controlling various communication units.

The ticket scheduling operation of the playing facility is performed by various playing facility information stored in the storing unit 23 and the scheduler 24 with reference to the reservation information received from the user terminal 3. In the case that there is a reservation request from a user, if there is a certain change of the playing facility in the playing facility terminal 2, a ticketing schedule is re-updated. The storing unit 23 includes a database as one of the above-described elements. Among the database, one corresponds to a playing facility information database, and another corresponds to a user reservation information database. Both database are controlled by the database engine and are inter-worked with the scheduler.

The operation of the central management server 1 will be explained. A playing facility information received from the playing facility terminal 2 is received from the communication unit 21 of the central management server 1. The received information is stored into the storing unit through the controller 22 and is transmitted to the scheduler 24. The scheduler 24 which received the playing facility information data performs a ticketing schedule operation with respect to each playing facility using the received information and transmits to the controller 22. The controller stores the received information into the storing unit 23 and transmits a playing facility riding state signal which informs a ticketing schedule information and a riding time of a certain playing facility whenever the user terminal 3 requests a ticketing schedule information with respect to each playing facility to the user terminal 3. In addition, when a user performs a reservation with respect to a certain playing facility using the user terminal 3, the communication unit 21 receives a playing facility information and a riding time information from the user terminal 3 and an inherent identification code of the user terminal, and the controller 22 stores the received information and transmits to the scheduler 24 for thereby updating the ticketing schedule information. In addition, the updated ticketing schedule information and user reservation information are transmitted to the playing facility terminal 2 through the communication unit 21 of the central management server 1. In this process, if there is a certain change in the central management server 1 and the playing facility terminal 2, the changed data is transmitted to each other in real time with respect to the data change for thereby synchronizing the transmitted data. The above-described operations are periodically performed. In addition, a communication between the playing facility terminal 2 and the central management server 1 and the user terminal 3 and the central management server 1 is periodically performed based on a certain time period. If there is a request, a communication channel is formed for thereby performing a communication at every hour.

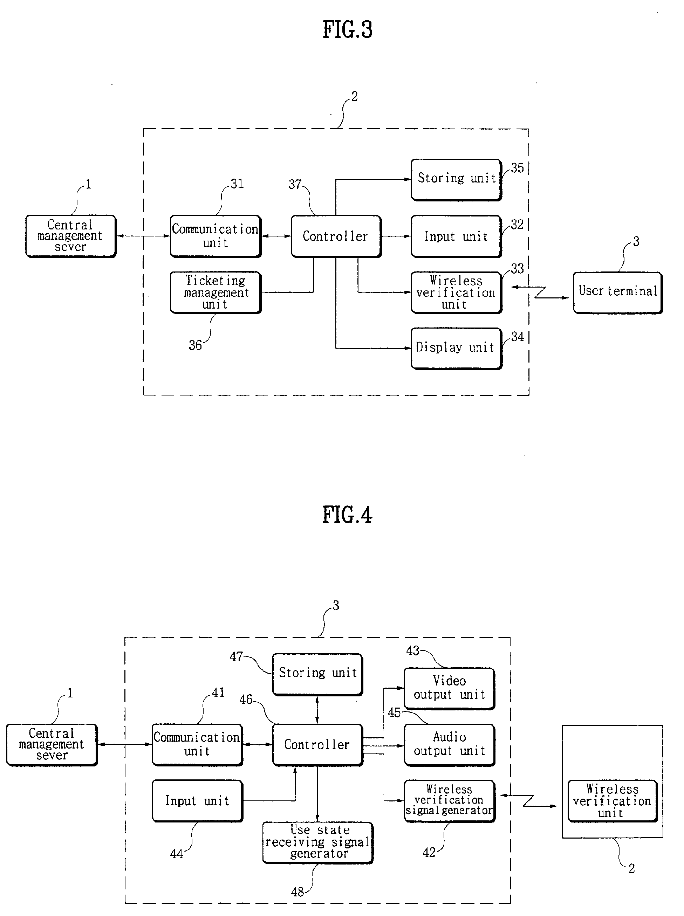

Figure 3 is a block diagram of an inner construction of the playing facility terminal 2 of Figure 1.

The playing facility terminal 2 includes a communication unit 31 for performing a data communication with the central management server 1, a manager input unit 32 for inputting a playing facility information, a wireless verification unit 33 for performing a communication with the reservation user terminal 3 and checking whether a user is ridded on a certain playing facility, a storing unit 35 for storing the data received from the central management server 1 and a manager input information, a ticketing management unit 36 stored in a certain recording medium for managing a reservation information transmitted from the central management server 1 and a ticketing information of the playing facility and performing a ticketing operation, a display unit 34 for providing a certain interface between the playing facility manager and the playing facility, and a controller 37 for controlling each element of the playing facility terminal 2.

The input unit 3 which is an inner element of the playing facility terminal 2 may be a key input device such as a touch screen, an electronic ball pen, an electronic note or a keyboard.

The wireless verification unit 33 is inter-worked with the wireless verification signal generator 42 of the user terminal. When a user makes a reservation and rides on a corresponding playing facility, the wireless verification signal generator 42 transmits an inherent code and reservation information of the user terminal to the wireless verification unit 33 for thereby checking whether the reserved user ridded the playing facility and whether the user having the user terminal 3 who made the reservation is directly ridded on the playing facility.

A RFID signal checking apparatus may be used for the wireless verification unit 33.

The ticketing management unit 36 is a ticketing management program stored in a certain recording medium and performs a ticketing operation of the playing facility manager.

The storing unit stores a playing facility information database and a reserved-used information database. The reserved-user information database stores an inherent identification code of the reservation user terminal 3 and the riding time information, and when the reserved user rides a playing facility, the inherent code signal generated by the wireless verification signal generator 42 of the user terminal 3 is compared for thereby managing the riding of the reserved user.
Next, the operation of the playing facility terminal 2 will be explained. When the playing facility terminal 2 received a playing facility information through the input unit 32, the input unit transmits the inputted signal to the controller of the playing facility terminal 2, and the controller 37 stores the signal into the storing unit 35. If a certain time is elapsed or if there is a request from the central management server 1, the stored information is transmitted to the central management server through the communication unit 31. When the ticketing schedule information transmitted from the central management server 1 is received through the communication unit 31, the controller stores the same into the storing unit, and in the case that the playing facility ticket is bought, the ticket management unit 36 is driven, and a ticketing schedule information is loaded from the storing unit for thereby implementing an easily ticketing operation. In addition, the changed information of the playing facility terminal is updated and stored into the storing unit in real time and is transmitted to the central management server 1. In addition, when the reserved user rides a corresponding playing facility, a data communication is performed with the wireless verification signal generator 42 of the user terminal 3 of Figure 4 through the wireless verification unit 33 for thereby performing a riding operation of the reserved user and a verification process of the reservation terminal.
Figure 4 is a view illustrating an inner construction of the user terminal 3 in an amusement park playing facility use guide system of Figure 1.
As shown therein, the user terminal 3 includes a wireless communication unit 41 for communicating with a central management server 1, a wireless verification signal generator 42 for inter-working with the wireless verification unit 33 of the playing facility terminal 2 and generating an inherent identification code signal, a video output unit 43 for receiving a data from the central management server 1 through the wireless communication unit 41, an audio output unit 45 for receiving an audio signal from the central management server 1 through the wireless communication unit 41 and outputting through a certain process, a user input unit 44 for inputting a user reservation information of a playing facility, a storing unit 46 for temporarily storing a manager input data and a reservation information data, a use state signal generator 48 for generating a use state signal when a certain data is received, and a controller 48 for receiving a wireless signal of the user terminal 3, controlling the received signal and controlling each element of the user terminal in which a certain signal is outputted and stored.
The inherent identification code outputted from the wireless verification signal generator 42 may be stored in a certain storing unit of the user terminal 3. In the case that the wireless verification signal generator 42 is constructed based on a circuit system, so that an inter-working signal is generated from the playing facility terminal 2, a code signal may be transmitted to the wireless verification unit 33 of the playing facility terminal 2 for thereby implementing a verification procedure.
The video output unit 43 visually outputs a received information. In the case that the video output unit 43 has a touch screen function, an additional input apparatus is not needed.
The input unit 44 may be implemented by a key pad, an electronic pen, a touch screen, etc.
When a data is received from the central management server, the use state receiving signal generator 48 helps the user to recognize the received data. The use state receiving signal generator 48 is formed of a LED for informing by light and a vibrator for informing by vibration. In the case of a sound signal such as a bell sound, the use state receiving signal generator 48 is not provided. The audio output unit 45 may work for the function of the use state receiving signal generator 48.

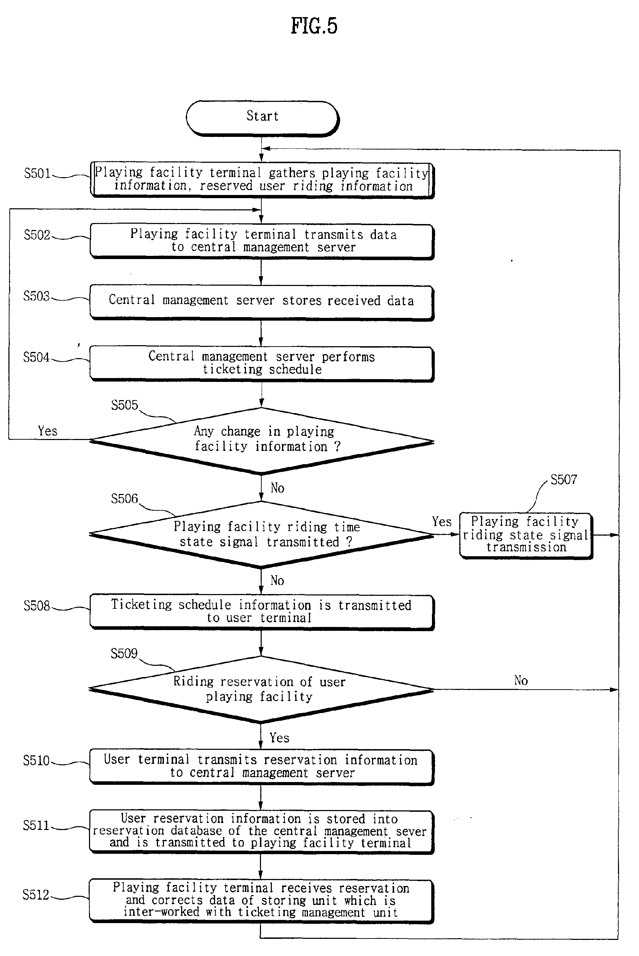

Figure 5 is a flow chart of an amusement park playing facility use guide method according to the present invention.
In the amusement park playing facility use guide method according to the present invention, each playing facility terminal 2 gathers a ticketing information, a user waiting number information, and a riding information of a reserved user from the playing facility terminal 2 or a reserved user information from the central management server 1 and stores the gathered information into the storing unit 35 and updates(S501) the stored data and transmits(S502) to the central management server 1. The central management server(1) receives the information gathered by the playing facility terminal 2 and stores the information into the database(S503). The central management server 1 processes the updated database using the received data and performs a ticketing schedule(S504). When the ticketing schedule is performed, the central management server 1 checks whether the information of the playing facility terminal 2 is changed(S505). If the information of the playing facility terminal 2 is changed, the steps from S502 are performed. If the information of the playing facility terminal 2 is not changed, the central management server 1 checks whether it is the time of the riding state signal transmission of a corresponding playing facility(S506). As a result of the judgment, if it is the time of the playing facility riding state signal transmission, the central management server 1 transmits a playing facility riding state signal to a plurality of the user terminals 3 based on a broadcasting method(S507). The routine is moved to Step S501, and the steps from Step S501 are performed. Here, the riding state signal may be transmitted to only a reserved user terminal 3 at a certain time based on the broadcasting method. As a result of Step S506, if it is not the time of the playing facility riding state signal transmission, the ticketing schedule information is transmitted to a plurality of user terminals 3 based on the broadcasting method(S508). The users receive a ticketing schedule information of Step S508 using the user terminal 3 and know the using states of the playing facilities and make a reservation for a playing facility in a remote region. In this process, if the user does not make a reservation, the routine is moved to Step S501, and the steps from Step S501 are performed. If the user makes a reservation for a playing facility, the user terminal 3 transmits a reservation information including an inherent identification code, a playing facility name and a playing facility riding time information to the central management server 1(S509, S510).
The central management server 1 receives the reservation information(Step S510) and stores the reservation information into the reservation database and transmits the reservation information to the playing facility terminal 2(S511). The playing facility terminal 2 which received the transmitted reservation information data updates the data information of the database which is stored in the storing unit and inter-works with the ticketing management unit to the information received from the central management server 1, and the routine is moved to Step S501, and the steps from Step S501 are performed.

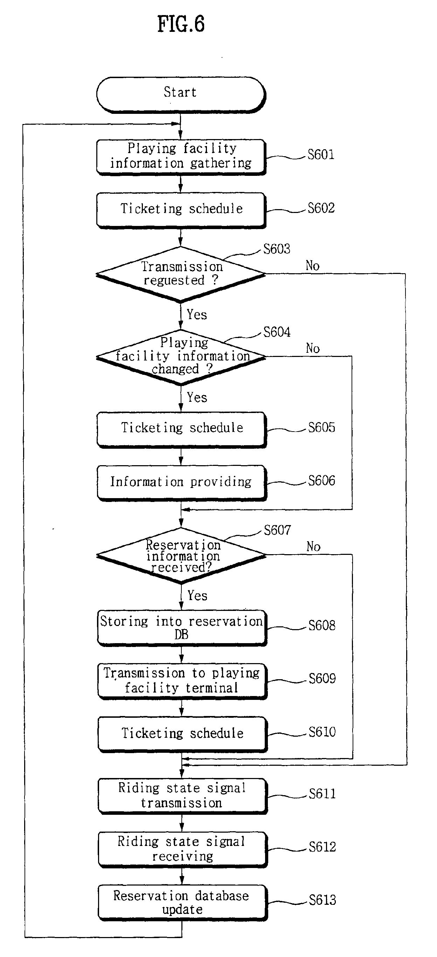

Figure 6 illustrates a processing procedure of the central management server 1. As shown therein, in the processing procedure of the central management server 1, a playing facility information is received from the playing facility terminal 2(S601). The received playing facility information is stored in the database, and the information such as a remaining seat number, a playing facility use time, etc. is processed, and then a ticketing schedule with respect to the playing facility is performed by the scheduler 24(S602). After the ticketing schedule is performed, it is judged whether a ticketing schedule information with respect to the playing facility ticketing state is requested from the user terminal 3(S603).
As a result of the judgment of Step S603, if there is not a transmission request with respect to the ticketing schedule from the user terminal 3, a playing facility state signal is transmitted to the user terminal 3 at a set time(S611). As a result of the judgment(S603), if there is a transmission request, it is judged whether there is any change in the playing facility information(S604).
As a result of the judgment of Step S604, if there is not any change in the playing facility information from the playing facility terminal 2, the routine is moved to Step S606, and a ticketing information of the playing facility is transmitted to the user terminal 3. As a result of the judgment of Step S604, if there is any change in the playing facility information from the playing facility terminal 2, the changed information from the playing facility terminal 2 is stored into the database, and the ticketing schedule is performed by the scheduler 24(S605).
When the scheduling is finished, a newly formed ticketing schedule information is transmitted to the user terminal 3(S606), and the ticketing schedule information transmitted to the user terminal 3 is outputted by the video output unit 43 of the user terminal 3. The user makes a reservation with reference to the outputted information, and it is judged whether a reservation information is received from the user terminal 3(S607).
In Step S607, if the reservation information is not received, a playing facility use state signal is transmitted at a certain standard time before the riding time(S611). If the reservation information is received, the reservation information is stored in the user reservation database of the storing unit 23 of the central management server 1(S608), and the reservation information of the user is transmitted to the playing facility terminal 2 in order to prevent any confusing of the ticketing in the playing facility terminal 2(S609).

Next, the scheduler 24 performs a ticketing schedule operation with respect to the ticketing time table based on the reservation information(S610).

The central management server 1 transmits a playing facility riding state signal to the user terminal 3 before a certain time from the time when the user rides a corresponding playing facility(S611). The signal generated by the wireless verification signal generator 42 when the reserved user who received the playing facility riding state signal rides a corresponding playing facility is checked by the wireless verification unit 33 of the playing facility terminal 2, and the riding verification information of the user is transmitted to the central management server 1, so that a riding signal of the reserved user is received(S612).

The user reservation database is updated based on the received reservation information(S613), and the routine is moved to the initial state, and the steps are performed from Step S601. Therefore, the processing procedure of the central management server 1 is completed.

In a state that the riding signal of the reserved user is not transmitted to the central management server 1, when a certain playing facility riding time is elapsed, the user reservation information is backed-up from the central management server 1 without leaving the user reservation information in a log file format or is deleted for thereby decreasing a unnecessary communication traffic based on a riding verification of the reserved user.

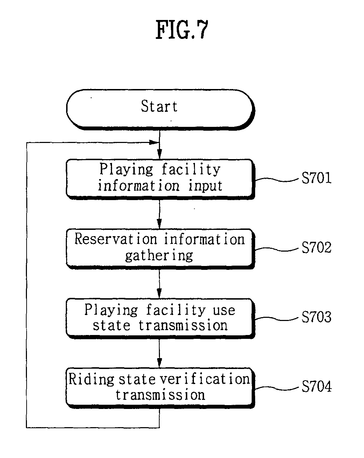

Figure 7 illustrates a processing procedure of the playing facility terminal 2 for the amusement park playing facility use guide method according to the present invention.

As shown therein, in the processing procedure of the playing facility terminal 2, a playing facility manager stores an information such as a ticketing information, an operation information, a current state information, etc. of a playing facility into the storing unit 35 using the manager input unit 32 of the playing facility terminal 2(S701), Next, when the reservation information reserved by a ticketing box of a corresponding playing facility and the reservation information signal from the user terminal 3 are transmitted to the central management server 1, the reservation information of the user transmitted by the central management server 1 is received for thereby gathering a reservation information of a playing facility(S702). The playing facility terminal transmits the playing facility information reservation information gathered in the previous steps to the central management server 1(S703). When the users ride the playing facility at a certain riding time, the users are checked, and the reserved users are checked by the wireless verification unit 33, and a riding verification signal is transmitted to the central management server 1(S704), and the routine is moved to Step S701. The steps from Step S701 are performed.

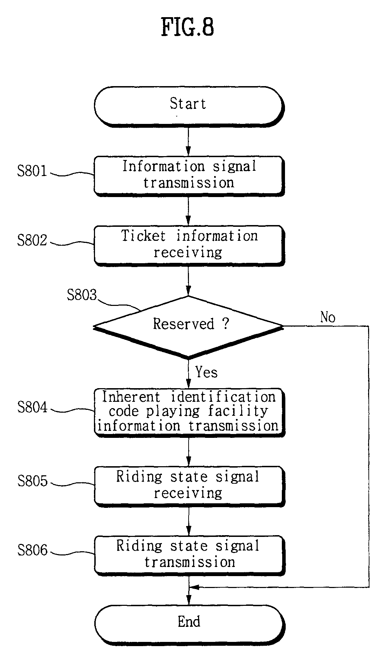

Figure 8 illustrates a processing procedure of the user terminal 3 for the amusement park playing facility use guide method according to the present invention.

A user receives a user terminal 3 when the user enters the amusement park. As shown therein, when a user wants to know a playing facility information, an information request signal is transmitted to the central management server 1 using a certain bi-directional communication member of the playing facility terminal 2(S801), the central management server 1 which received the signal with respect to the information request from the user terminal 3 in the previous step provides an information with respect to the playing facility to the user terminal 3(S802). In addition, if the user does not make a reservation based on the received ticketing information, the information is searched, and then the routine is stopped. If the user makes a playing facility riding reservation, a playing facility information, namely, a playing facility name, the number of users, a playing facility riding time, etc. and an inherent identification code provided to the user terminal 3 are transmitted to the central management server 1(S803, S804). Next, the playing facility riding state signal is received at a certain time before the playing facility riding time(S805). The user rides a corresponding playing facility based on the playing facility riding signal, and a signal like a RFID signal is generated from the wireless verification signal generator 42 of the user terminal 3 for thereby checking the riding state of the user.
In the case that the user terminal 3 requests an amusement park information material, a playing facility ticketing schedule information to the central management server 1, a communication channel may be formed for performing a data communication in real time at the time when the amusement park information is requested irrespective of a certain reference time.
In the present invention, when users use playing facilities in an amusement park, it is possible to decrease time required in order for the users to wait and ride the playing facilities. Therefore, in the present invention, the users do not need to wait long time for riding the playing facilities.
Furthermore, in the conventional art, many people may be concentrated at a certain spot for using a certain playing facility. In the present invention, it is possible to decrease the complex of people in the amusement park by overcoming the problems of the conventional art.
As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A use guide system for amusement park facilities, comprising:
A plurality of user terminals each having a communication unit for receiving and displaying a playing facility ticketing schedule information and a playing facility use state information, transmitting a wireless reservation information with respect to the playing facility using the received playing facility state information and receiving a playing facility riding state signal;
a plurality of playing facility terminals installed in each playing facility for gathering an information with respect to the use state of each playing facility in real time, receiving a reservation information trough the user terminals, performing a ticketing management and transmitting the playing facility use state data through a communication network at a certain time; and
a central management server for receiving the playing facility use state information from the playing facility terminal, classifying and storing the playing facility information based on a certain reference, performing a ticketing schedule, transmitting one among the playing facility riding state signal, the ticketing schedule information and the playing facility riding state signal to the user terminals, receiving a reservation information from the user terminal, performing the ticketing schedule and transmitting the ticketing schedule information to the playing facility terminals.

2. The system of claim 1, wherein said central management server includes:
a communication unit for performing a data communication with one among the user terminals or the playing facility terminals;
a storing unit for storing an externally received data;
a scheduler for performing a ticketing schedule of the playing facility using a data stored in the storing unit; and
a controller for controlling each element of the central management server,
wherein the controller stores the data collected by the communication unit into the storing unit and drives the scheduler, and when the data stored in the storing unit is outputted to the scheduler, the scheduler performs a ticketing schedule, and the ticketing schedule information which is processed for the ticketing schedule to the user terminals and the playing facility terminals through the communication unit, and the communication unit receives the playing facility riding reservation signal transmitted from the user terminal, and the ticketing schedule is changed and is transmitted to the playing facility terminal, and the playing facility riding state signal is transmitted to the user terminals, respectively, before the playing facility riding time.

3. The system of claim 1, wherein said playing facility terminals each includes:
a communication unit for performing a data communication with the central management server;
a manager input unit for inputting the playing facility information;
a wireless verification unit for performing a wireless communication with the reservation user terminal and checking whether the user is a reserved user;
a storing unit for storing the data received from the central management server and the manager input information;
a ticketing management unit for managing a reservation information transmitted from the central management server and a ticketing information of the playing facility, performing a ticketing procedure and storing a certain program;
a display unit for providing a visual interface between the manager and the playing facility; and
a controller for controlling each element of the playing facility terminal,
wherein the controller receives an information outputted from the input unit, outputs the received information to the display unit, transmits the information to the central management server through the communication unit and controls the wireless verification unit for checking a riding state of the reserved user.

4. The system of claim 1, wherein said user terminal includes:
a communication unit for performing a communication with the central management server;
a RFID signal generator for inter-working with the wireless verification unit of the playing facility terminal and outputting an inherent identification code based on a wireless method;
a video output unit for receiving a data transmitted from the central management server and displaying the received data;
an audio output unit for outputting an audio signal transmitted from the central management server;
a user input unit for inputting a user reservation information of the playing facility;
a storing unit for temporarily storing the reservation information of the playing facility;
a use state receiving signal generator for informing a data receiving state when a certain data is received from the central management server; and
a controller for controlling each element of the user terminal.

5. The system of claim 2, wherein said storing includes:
a reserved user database for storing a user reservation information transmitted from the user terminal; and
a playing facility database for storing a playing facility information transmitted from the playing facility terminal.

6. The system of claim 5, wherein said reserved user database stores an inherent identification code of the reserved user terminal and a reservation riding time data of the playing facility.

7. An amusement park playing facility use guide method, comprising:
a first step for gathering a playing facility information from a playing facility terminal;
a second step for transmitting the playing facility information to a central management server and performing a ticketing schedule in the central management server;
a third step for transmitting the ticketing schedule information to the user terminal;
a fourth step for transmitting the playing facility riding reservation information from the user terminal which receives the ticketing schedule information to the central management server; and
a fifth step for receiving the reservation information by the central management server, updating the ticketing schedule information and transmitting the reservation information to the playing facility terminal, and riding state signal to reserved user terminals before the user use the playing facility.

8. The method of claim 7, wherein said first step includes:
a sixth step for gathering a ticketing information and operation time information of the playing facility;
a seventh step for receiving a ticketing schedule information performed by the central management server;
an eighth step for receiving a playing facility reservation information of the user from the central management server; and
a ninth step for checking the reserved user by the wireless verification unit of the playing facility terminal and the wireless verification signal generator of the user terminal when the reserved user rides the reserved playing facility,

9. The method of claim 7, wherein said second step includes:
a tenth step for receiving the playing facility information from the playing facility terminal through the communication unit;
an eleventh step for storing the received playing facility information into the storing unit based on the controller;
a twelfth step in which the controller drives the scheduler and performs a ticketing schedule using the playing facility information; and
a thirteenth step in which the controller stores the ticketing schedule information into the storing unit.

10. The method of claim 8, wherein said playing facility reservation information is formed of a playing facility name, a riding reservation time, and an inherent identification code information of the user terminal.

11. the method of claim 7, wherein said fourth step includes a fourteenth step in which when the riding reservation information is not received from the user terminal, the playing facility use state signal is transmitted to the user terminal, and the steps from the first step are performed.
